# EUROPEAN PATENT APPLICATION

(11) **EP 4 202 639 A1**
(43) Date of publication of application: **28.06.2023**
(21) Application number: 22212812.6
(22) Date of filing: 12.12.2022
(51) Int. Cl.: G06F 7/487

(54) **EFFICIENT CIRCUIT FOR NEURAL NETWORK PROCESSING**

(30) Priority: 23.12.2021 US 202163293400 P; 06.01.2022 US 202217570326
(71) Applicant: Samsung Electronics Co., Ltd., Gyeonggi-do 16677 (KR)
(72) Inventor: LI, Ling, San Jose, CA, 95134 (US); SHAFIEE ARDESTANI, Ali, San Jose, CA, 95134 (US); ABDELAZIZ, Hamzah, San Jose, CA, 95134 (US); HASSOUN, Joseph H., San Jose, CA, 95134 (US)
(74) Representative: Kuhnen & Wacker Patent- und Rechtsanwaltsbüro PartG mbB

(57) **Abstract**

A system and method for efficient processing for neural network inference operations. In some embodiments, the system includes: a circuit configured to multiply a first number by a second number, the first number being represented as: a sign bit, five exponent bits, and seven mantissa bits, representing an eight-bit full mantissa.

## Description

### TECHNICAL FIELD

One or more aspects of embodiments according to the present disclosure relate to artificial neural networks, and more particularly to a system and method for efficient processing for neural network inference operations.

### BACKGROUND

In an artificial neural network, processing for inference operations may involve large numbers of multiplication and addition operations. In some circumstances, it is advantageous for the processing to be performed quickly, and it may also be advantageous for the processing to consume little energy.

It is with respect to this general technical environment that aspects of the present disclosure are related.

### TECHNICAL PROBLEM

In some embodiments, a purpose of the invention is to provide a system and method for efficient processing for neural network inference operations.

### SUMMARY

According to an embodiment of the present disclosure, there is provided a system, including: a circuit configured to multiply a first number by a second number, the first number being represented as: a sign bit, five exponent bits, and seven mantissa bits, representing an eight-bit full mantissa.

In some embodiments, the circuit includes: a first multiplier; a second multiplier; a third multiplier; and a fourth multiplier, each of the first multiplier, the second multiplier, the third multiplier, and the fourth multiplier being a 4 bit by 8 bit multiplier.

In some embodiments, the second number is represented as: a sign bit, five exponent bits, and seven mantissa bits, representing an eight-bit full mantissa.

In some embodiments, the circuit is configured, in a first configuration, to multiply the full mantissa of the first number and the full mantissa of the second number using the first multiplier and the second multiplier.

In some embodiments, the circuit is configured, in a second configuration, to calculate an approximate product of a third number and a fourth number, each of the third number and the fourth number being represented as: a sign bit, five exponent bits, and ten mantissa bits, representing an 11-bit full mantissa.

In some embodiments, the circuit is configured, in the second configuration, to: multiply eight bits of the full mantissa of the third number by eight bits of the full mantissa of the fourth number using the first multiplier and the second multiplier, multiply three bits of the full mantissa of the third number by eight bits of the full mantissa of the fourth number using the third multiplier, and multiply eight bits of the full mantissa of the third number by three bits of the full mantissa of the fourth number using the fourth multiplier.

In some embodiments, the circuit is configured not to calculate the product of the three least significant bits of the full mantissa of the third number and the three least significant bits of the full mantissa of the fourth number.

In some embodiments, the second number is an 8-bit integer and the circuit is configured to multiply 8 bits of the full mantissa of the first number by the second number using the first multiplier and the second multiplier.

In some embodiments, the second number is a 4-bit integer and the circuit is configured to multiply 8 bits of the full mantissa of the first number by the second number using the first multiplier.

According to an embodiment of the present disclosure, there is provided a method including: multiplying, by a circuit, a first number by a second number, the first number being represented as: a sign bit, five exponent bits, and seven mantissa bits, representing an eight-bit full mantissa.

In some embodiments, the circuit includes: a first multiplier; a second multiplier; a third multiplier; and a fourth multiplier, each of the first multiplier, the second multiplier, the third multiplier, and the fourth multiplier being a 4 bit by 8 bit multiplier.

In some embodiments, the second number is represented as: a sign bit, five exponent bits, and seven mantissa bits, representing an eight-bit full mantissa.

In some embodiments, the circuit is configured, in a first configuration, to multiply the full mantissa of the first number and the full mantissa of the second number using the first multiplier and the second multiplier.

In some embodiments, the circuit is configured, in a second configuration, to calculate an approximate product of a third number and a fourth number, each of the third number and the fourth number being represented as: a sign bit, five exponent bits, and ten mantissa bits, representing an 11-bit full mantissa.

In some embodiments, the circuit is configured, in the second configuration, to: multiply eight bits of the full mantissa of the third number by eight bits of the full mantissa of the fourth number using the first multiplier and the second multiplier, multiply three bits of the full mantissa of the third number by eight bits of the full mantissa of the fourth number using the third multiplier, and multiply eight bits of the full mantissa of the third number by three bits of the full mantissa of the fourth number using the fourth multiplier.

In some embodiments, the circuit is configured not to calculate the product of the three least significant bits of the full mantissa of the third number and the three least significant bits of the full mantissa of the fourth number.

In some embodiments, the second number is an 8-bit integer and the circuit is configured to multiply 8 bits of the full mantissa of the first number by the second number using the first multiplier and the second multiplier.

In some embodiments, the second number is a 4-bit integer and the circuit is configured to multiply 8 bits of the full mantissa of the first number by the second number using the first multiplier.

According to an embodiment of the present disclosure, there is provided a system, including: means for multiplying a first number by a second number, the first number being represented as: a sign bit, five exponent bits, and seven mantissa bits, representing an eight-bit full mantissa.

### ADAVANTAGEOUS EFFECT OF THE DISCLOSURE

According to an embodiment of the present disclosure, a system and method are provided for efficient processing for neural network inference operations.

### BRIEF DESCRIPTION OF THE DRAWINGS

These and other features and advantages of the present disclosure will be appreciated and understood with reference to the specification, claims, and appended drawings wherein:
FIG. 1A is an illustration of several numerical representations, according to an embodiment of the present disclosure;
FIG. 1B is table of characteristics of several numerical representations, according to an embodiment of the present disclosure;
FIG. 2A is an illustration of the calculation of an approximate product, according to an embodiment of the present disclosure;
FIG. 2B is an illustration of hardware for calculating a product or an approximate product, according to an embodiment of the present disclosure;
FIG. 3A is a table of performance characteristics, according to an embodiment of the present disclosure;
FIG. 3B is a table of performance characteristics, according to an embodiment of the present disclosure;
FIG. 3C is a table of performance characteristics, according to an embodiment of the present disclosure;
FIG. 4 is a table of performance characteristics, according to an embodiment of the present disclosure;
FIG. 5 is a table of performance characteristics, according to an embodiment of the present disclosure; and
FIG. 6 is a table of performance characteristics, according to an embodiment of the present disclosure.

### DETAILED DESCRIPTION

The detailed description set forth below in connection with the appended drawings is intended as a description of exemplary embodiments of a system and method for efficient processing for neural network inference operations provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

An artificial neural network performing inference operations may perform large numbers of multiplication and addition operations. These operations may form a significant part of the computational burden of the artificial neural network, so that reducing the cost of such operations may have a significant impact on the performance (e.g., the processing speed) of the artificial neural network. Further, inference operations may in some situations be performed in a portable device, e.g., in a mobile phone. In such a situation it may be advantageous to limit both circuit size and power consumption, and hardware that is capable of performing multiplications and additions in a relatively small amount of chip area, and using little power, may be advantageous.

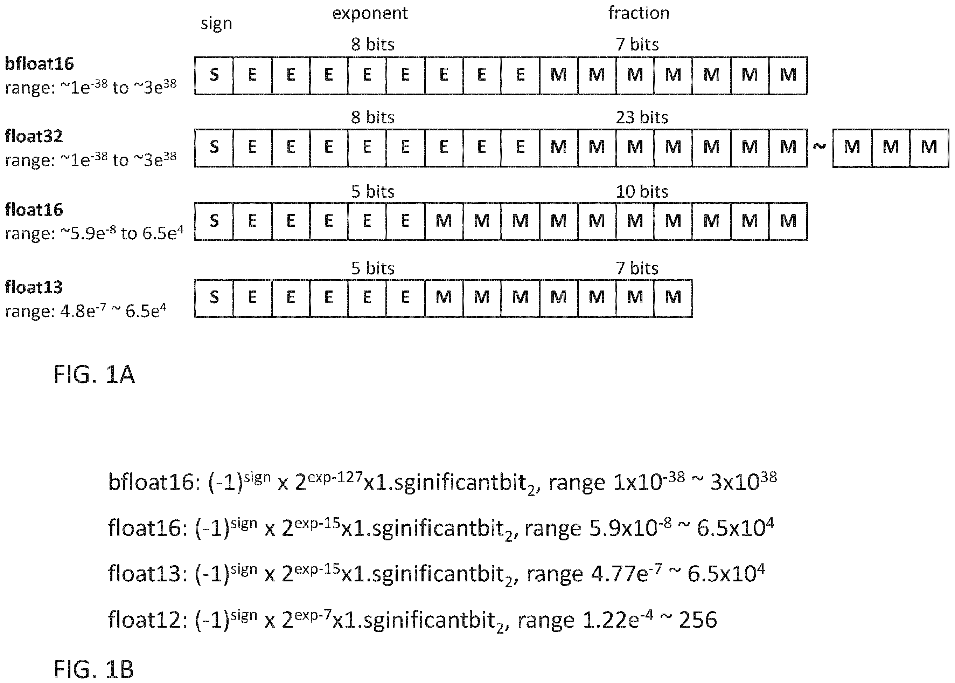

Some of (e.g., the majority of) the multiplication operations performed by an artificial neural network may be multiplication operations each forming the product of a weight and an activation. In some circumstances both the weight and the activation may be represented as floating point numbers. FIG. 1 shows various floating point representations, including bfloat16 (which may also be referred to as BF16), float32 (which may also be referred to as FP32), float16 (which may also be referred to as FP16), and float13 (which may also be referred to as FP13). Each of these representations has one sign bit, a number of exponent bits, and a number of mantissa (or "fraction") bits. In each of the representations, the mantissa (or "full mantissa") represented by the mantissa bits is composed of a leading, implicit one bit (a bit having the value 1), followed by the mantissa bits. The binary number that is formed by the mantissa bits (without the leading implicit one bit) may be referred to as the "truncated mantissa".

As shown in FIG. 1A, the bfloat16, and float32 representations may each have eight exponent bits, and the float16, and float13 representations may each have five exponent bits. Each of the bfloat16 representation and the float13 representation may have seven mantissa bits (i.e., the truncated mantissa may have a length of seven bits in each case), the float32 representation may have 23 mantissa bits (i.e., the truncated mantissa may have a length of 23 bits in the float32 representation), and the float16 representation may have ten mantissa bits (i.e., the truncated mantissa may have a length of ten bits in the float16 representation). FIG. 1B shows the equation, and the range, corresponding to each of bfloat16, float16, float13, and float12. It may be seen that float13 has a range close to that of float16, whereas float12 has a significantly smaller range.

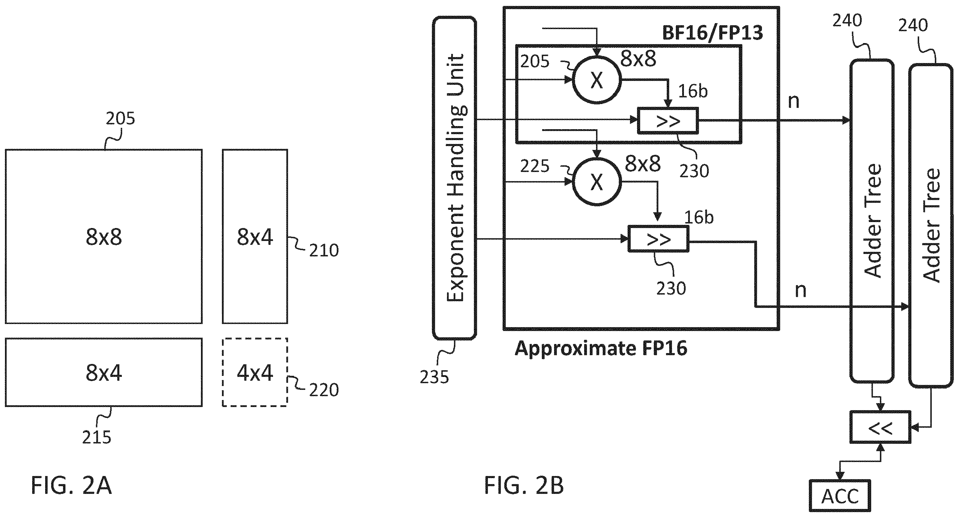

In some embodiments, an approximate product of two FP16 numbers (each of which has a full mantissa with 11 bits) may be calculated using significantly smaller hardware than a full 11-bit by 11-bit (or "11 × 11") multiplier. As shown in FIG. 2A, to form an approximate product of a first 11-bit full mantissa with a second 11-bit full mantissa, a first partial product may be calculated as the product of the most significant 8 bits of the first full mantissa and the most significant 8 bits of the second full mantissa, a second partial product may be calculated as the product of the most significant 8 bits of the first full mantissa and the least significant 3 bits of the second full mantissa, and a third partial product may be calculated as the product of the least significant 3 bits of the first full mantissa and the most significant 8 bits of the second full mantissa.

These partial products may then be summed to form the approximate product of the two FP16 numbers; the partial product that is the product of the least significant 3 bits of the first full mantissa and the least significant 3 bits of the second full mantissa may be omitted, to reduce the size of the hardware employed to perform the calculation, at the cost of at most 0.02% accuracy loss, or no accuracy loss, compared to FP16. FIG. 2A shows how the three partial products may be calculated using 4 × 8 multipliers. A first composite multiplier 205, which is an 8 × 8 multiplier (which may include, e.g., consist of, a first multiplier, which is a 4 × 8 multiplier, and a second multiplier, which is a 4 × 8 multiplier) may calculate the first partial product; a third multiplier 210, which is a 4 × 8 multiplier, may calculate the second partial product; and a fourth multiplier 215, which is a 4 × 8 multiplier, may calculate the third partial product. Each 3-bit number (e.g., the least significant three bits of the first full mantissa or of the second full mantissa) may be padded with a zero when it is fed into the 4-bit input of a 4 × 8 multiplier. A fifth multiplier 220 (which may be a 4 × 4 multiplier that if present could be used to calculate a fourth partial product as the product of the least significant 3 bits of the first full mantissa and the least significant 3 bits of the second full mantissa) may be absent (to reduce the size of the hardware used for multiplication) and is therefore shown in FIG. 2A with a dashed outline.

FIG. 2B shows a configurable multiplier circuit that may be used to calculate (i) the product of two FP13 numbers, (ii) the approximate product of two FP16 numbers, or (iii) the product of an integer with a mantissa or with a portion of a mantissa (e.g., to calculate the product of an integer with either FP13 or FP16). The first composite multiplier 205 (which may include, e.g., consist of, two 4 × 8 multipliers as explained above in the context of FIG. 2A) may be used (i) to calculate the product of the first full 8-bit mantissa and the second full 8-bit mantissa when the product of two FP13 numbers is being calculated, or (ii) to calculate the first partial product, when the approximate product of two FP16 numbers is being calculated. A second 8 × 8 multiplier 225 (which may include, e.g., consist of, the third and fourth 4 × 8 multipliers discussed above in the context of FIG. 2A) may be used (i) to calculate an additional product of a first full 8-bit mantissa and a second full 8-bit mantissa, of two additional FP13 numbers or (ii) to calculate the second partial product and the third partial product, when the approximate product of two FP16 numbers is being calculated. The partial products (or the full product of the first full 8-bit mantissa and the second full 8-bit mantissa when a product of two FP13 numbers is being calculated) may be fed (after being shifted, by a shifter 230, according to a signal from an exponent handling unit 235) to adder trees 240, as shown, to be summed with other like products or partial products. The multiplier circuit of FIG. 2B may also be configured to calculate products with integers. For example, the mantissa of an activation with an 8-bit full mantissa may be multiplied, in one of the 4×8 multipliers, by a weight in a 4-bit integer (int4) representation, or, in two of the multipliers (e.g., by the first composite multiplier 205), by a weight in an 8-bit integer (int8) representation. The multiplier circuit may be implemented as a state machine that is not a stored-program computer.

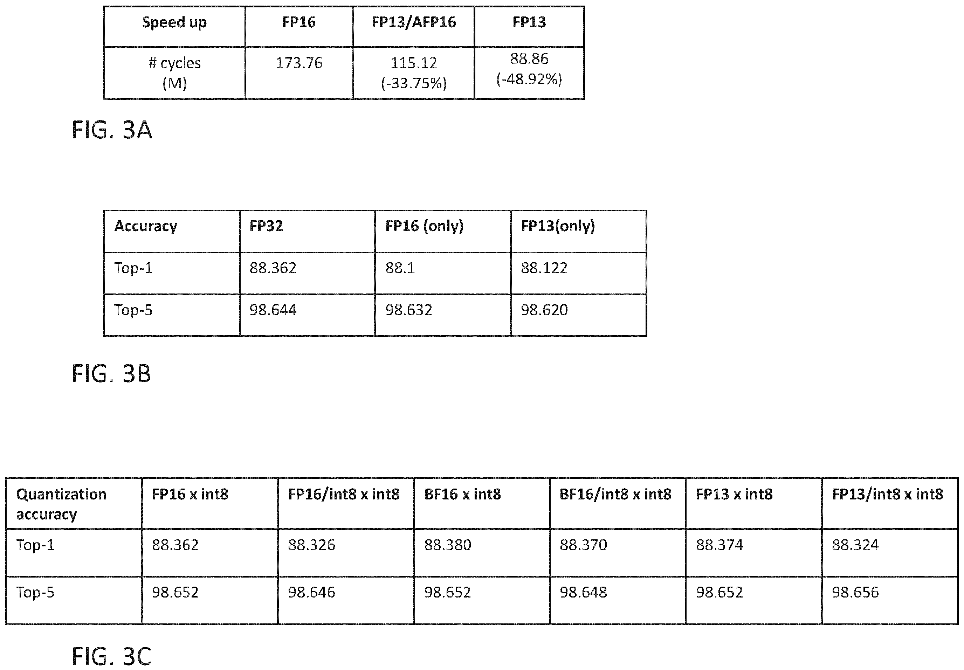

FIGs. 3A - 3C show performance results for EfficientNet L2 inference operations. FIG. 3A shows that the use of FP13 instead of FP16 results in an increase in speed of nearly a factor of two (for the same number of multipliers; this is consistent with an FP13 multiplication requiring half as many 4 × 8 multipliers as an FP16 multiplication, as discussed above, in the context of FIG. 2B). Mixed precision operation, with a first subset of the layers of the artificial neural network using FP13 and a second subset of the layers of the artificial neural network using approximated FP16, results in a reduction in the number of processing cycles of 33.75%. FIG. 3B shows the Top-1 accuracy and the Top-5 accuracy for processing using float32 processing, using FP16 processing, or using FP13 processing. It may be seen that the performance degrades slightly when FP16 is used instead of FP32, but that there is no further degradation when FP13 is used instead of FP16.

FIG. 3C shows the the Top-1 accuracy and the Top-5 accuracy for processing using various combinations for the representation of the activations and the representation of the weights, shown in the top row of the table. In the top row, the text preceding the multiplication symbol ("×") indicates the representation (or, for mixed precision, the representations) used for the activations, and the text following the multiplication symbol indicates the representation used for the weights. For example, "FP16 × int8" means that the activations use an FP16 representation and the weights use an 8-bit integer representation, and "FP13/int8 × int8" means that (i) the activations use mixed precision, with a first subset of the layers of the artificial neural network using FP13 and a second subset of the layers of the artificial neural network using int8, and (ii) the weights use an 8-bit integer representation). It may be seen that the performance does not degrade when FP13 is used for the activations instead of FP16. The use of FP13 activations with int8 weights may result (in addition to a speedup of about a factor of 2) in a reduction in power consumption of 0.53% and in a chip area increase of 2.3%.

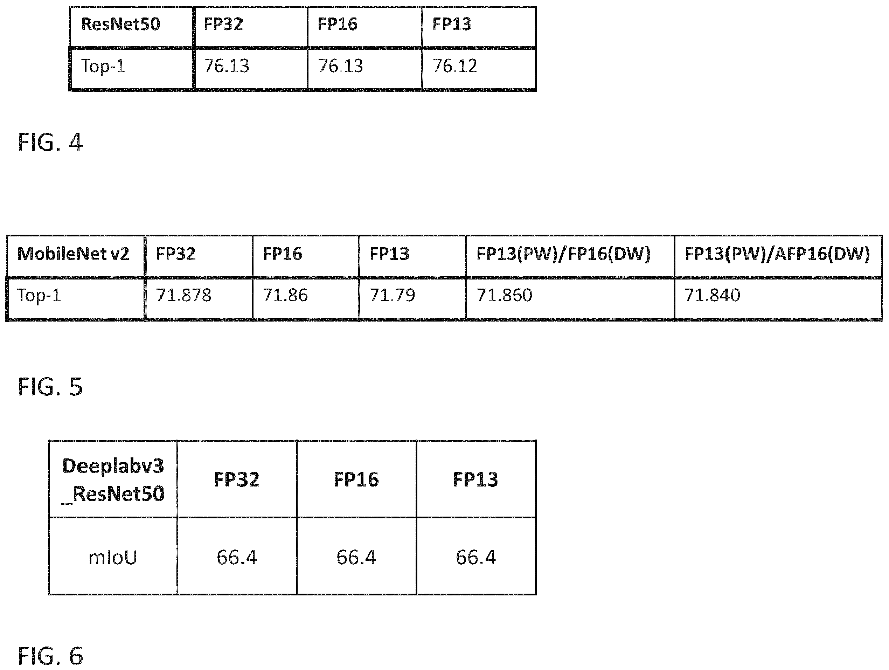

FIG. 4 shows performance results for ResNet50 inference operations. It may be seen that the degradation in Top-1 accuracy when using FP13 instead of FP16 is small (0.01%). FIG. 5 shows performance results for MobileNet v2 inference operations. It may be seen that (i) the Top-1 accuracy degrades by 0.07% when FP13 is used instead of FP16, (ii) the Top-1 accuracy does not degrade when, instead of using FP16 for all multiplications, FP13 is used in point-wise (PW) layers and FP16 is used in depth-wise (DW) layers, and (iii) the Top-1 accuracy degrades by 0.02% when, instead of using FP16 for all multiplications, FP13 is used in point-wise (PW) layers and approximate FP16 multiplications are used in depth-wise (DW) layers.

FIG. 6 shows the performance of a Deeplab v3 neural network using a ResNet50 backbone, for performing segmentation tasks, for multiplications performed using FP32, FP16 and FP13 representations. The performance, measured using the mean intersection over union metric, does not degrade when the FP13 representation is used instead of FP16 or FP32. The intersection over union metric (which may also be referred to as the Jaccard index) is defined to be the ratio of (i) the area of overlap between an estimated region and a true region to (ii) the area of the union of the estimated region and the true region, where the true region may be a region of an image that is properly classified in a category (e.g., the region in the image occupied by a foreground object) and the estimated region is an estimate, produced by the artificial neural network, of the region of the image that is in the category.

As used herein a "multiplier", or "means for multiplying" is a digital circuit for calculating products, the digital circuit being a state machine that is not a stored-program computer. As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

Although exemplary embodiments of a system and method for efficient processing for neural network inference operations have been specifically described and illustrated herein, many modifications and variations will be apparent to those skilled in the art. Accordingly, it is to be understood that a system and method for efficient processing for neural network inference operations constructed according to principles of this disclosure may be embodied other than as specifically described herein. The invention is also defined in the following claims.

## Claims

1. A system, comprising:
a circuit configured to multiply a first number by a second number,
the first number being represented as:
a sign bit
five exponent bits, and
seven mantissa bits, representing an eight-bit full mantissa.

2. The system of claim 1, wherein the circuit comprises:
a first multiplier;
a second multiplier;
a third multiplier; and
a fourth multiplier,
each of the first multiplier, the second multiplier, the third multiplier, and the fourth multiplier being a 4 bit by 8 bit multiplier.

3. The system of claim 2, wherein the second number is represented as:
a sign bit
five exponent bits, and
seven mantissa bits, representing an eight-bit full mantissa.

4. The system of claim 3, wherein the circuit is configured, in a first configuration, to multiply the full mantissa of the first number and the full mantissa of the second number using the first multiplier and the second multiplier.

5. The system of claim 4, wherein the circuit is configured, in a second configuration, to calculate an approximate product of a third number and a fourth number, each of the third number and the fourth number being represented as:
a sign bit
five exponent bits, and
ten mantissa bits, representing an 11-bit full mantissa.

6. The system of claim 5, wherein the circuit is configured, in the second configuration, to:
multiply eight bits of the full mantissa of the third number by eight bits of the full mantissa of the fourth number using the first multiplier and the second multiplier,
multiply three bits of the full mantissa of the third number by eight bits of the full mantissa of the fourth number using the third multiplier, and
multiply eight bits of the full mantissa of the third number by three bits of the full mantissa of the fourth number using the fourth multiplier.

7. The system of claim 6, wherein the circuit is configured not to calculate the product of the three least significant bits of the full mantissa of the third number and the three least significant bits of the full mantissa of the fourth number.

8. The system of claim 2, wherein the second number is an 8-bit integer and the circuit is configured to multiply 8 bits of the full mantissa of the first number by the second number using the first multiplier and the second multiplier.

9. The system of claim 2, wherein the second number is a 4-bit integer and the circuit is configured to multiply 8 bits of the full mantissa of the first number by the second number using the first multiplier.

10. The system of any one of claims 1 to 9, wherein the circuit is a digital circuit being a state machine that is not a stored-program computer.

11. A method comprising:
multiplying, by a circuit, a first number by a second number, the first number being represented as:
a sign bit
five exponent bits, and
seven mantissa bits, representing an eight-bit full mantissa.

12. The method of claim 11, wherein the circuit comprises:
a first multiplier;
a second multiplier;
a third multiplier; and
a fourth multiplier,
each of the first multiplier, the second multiplier, the third multiplier, and the fourth multiplier being a 4 bit by 8 bit multiplier.

13. The method of claim 12, wherein the second number is represented as:
a sign bit
five exponent bits, and
seven mantissa bits, representing an eight-bit full mantissa.

14. The method of claim 12, wherein the second number is an 8-bit integer and the circuit is configured to multiply 8 bits of the full mantissa of the first number by the second number using the first multiplier and the second multiplier.

15. The method of claim 12, wherein the second number is a 4-bit integer and the circuit is configured to multiply 8 bits of the full mantissa of the first number by the second number using the first multiplier.
